# EUROPEAN PATENT APPLICATION

(11) **EP 4 376 204 A1**
(43) Date of publication of application: **29.05.2024**
(21) Application number: 22929207.3
(22) Date of filing: 21.10.2022
(51) Int. Cl.: H01M 50/502, H01M 50/531, H01M 50/536

(54) **BATTERY COVER PLATE AND POWER BATTERY**

(30) Priority: 11.10.2022 CN 202222673198 U
(71) Applicant: Eve Power Co., Ltd., Jingmen Hubei 448000 (CN)
(72) Inventor: LIN, Chenneng, Jingmen, Hubei 448000 (CN); CHEN, Liquan, Jingmen, Hubei 448000 (CN); SONG, Shuaishuai, Jingmen, Hubei 448000 (CN); GONG, Li, Jingmen, Hubei 448000 (CN); WU, Shansong, Jingmen, Hubei 448000 (CN); SONG, Dongmei, Jingmen, Hubei 448000 (CN); WU, Lei, Jingmen, Hubei 448000 (CN); TAN, Jin, Jingmen, Hubei 448000 (CN)
(74) Representative: Petraz, Gilberto Luigi
(86) International application number: PCT/CN2022/126555
(87) International publication number: WO 2024/077653

(57) **Abstract**

The present application provides a battery cover and a power battery, and belongs to the field of battery technology. The battery cover includes a top cover assembly and an insulating support. The top cover assembly can be fixedly connected with a case to form an accommodation space for accommodating a core, and the top cover assembly can be welded with a tab on the core. The insulating support can be accommodated in the accommodation space. The insulating support and the top cover assembly form an accommodation cavity for accommodating the tab, and the insulating support is provided with a notch for the tab to pass through. The battery cover and the power battery provided by the present application can solve the problem that a reshaped part of the tab is inserted into the core backwards, avoid a short circuit, and improve safety and reliability of the power battery.

## Description

This application claims priority to Chinese Patent Application No. 202222673198.2 filed on October 11, 2022. The disclosure of the aforementioned application is incorporated herein by reference in its entirety.

### TECHNICAL FIELD

The present application relates to battery technologies, for example, to battery covers and power batteries.

### BACKGROUND

A battery includes a case, a core with at least one tab, and a cover. The core is accommodated in the accommodation space formed by the case and the cover. When assembling, the core is accommodated in the case, and the tab is flattened by ultrasonic welding and then laser welded together with the cover. Then, the cover is fixed on the case, and the tab is bent between the cover plate and the core, so as to maximize the utilization of the internal space. However, when the cover is closed, a reshaped part of the tab may be inserted into the core backwards, resulting in a short circuit.

### SUMMARY OF THE INVENTION

The present application provides a battery cover and a power battery capable of solving the problem that a reshaped part of a tab is inserted into a core backwards, avoiding a short circuit, and improving safety and reliability of the power battery.

In first aspect, an embodiment of the present application provides a battery cover, including: a top cover assembly capable of being fixedly connected with a case to form an accommodation space for accommodating a core, and capable of being welded with a tab on the core; and an insulating support capable of being accommodated in the accommodation space, wherein the insulating support and the top cover assembly form an accommodation cavity for accommodating the tab, and the insulating support is provided with a notch for the tab to pass through.

In one embodiment, the insulating support is detachably connected to the top cover assembly.

In one embodiment, the insulating support comprises two support bodies each connected with the top cover assembly, and the notch is formed between the two support bodies.

In one embodiment, the notch is provided with a fillet or rounded corner along a thickness direction of the insulating support.

In one embodiment, a welding mark is provided on the tab, and the welding mark is coated with insulating glue.

In one embodiment, the accommodation cavity is a cuboid-shaped cavity.

In one embodiment, the tab is bent in a Z-shape in the accommodation cavity.

In one embodiment, the insulating support is arranged to abut against the core.

In one embodiment, the insulating bracket is provided with a through hole communicating with the accommodation cavity.

In one embodiment, the core is coated with a protective film; and/or an outer surface of the case is coated with a protective film; and/or the tab is pasted with protective glue.

In one embodiment, the top cover assembly comprises: a cover plate capable of being fixedly connected with the case; an upper plastic part and a lower plastic part fixed respectively on opposite sides of the cover plate, the lower plastic part being connected with the insulating support; and a terminal extending through the upper plastic part, the cover plate and the lower plastic part, and being capable of being welded with the tab.

In one embodiment, at least one of the lower plastic part or the insulating support is provided with a recess, and the accommodation cavity is formed by the lower plastic part and the insulating support.

In one embodiment, the notch is disposed toward a lower terminal block at an end of the terminal.

In second aspect, an embodiment of the present application provides a power battery, including a case, a core and the above battery cover, wherein the core and an insulating support are accommodated in the accommodation space, the tab of the core is welded with the top cover assembly, and the tab is accommodated in the accommodation cavity.

The beneficial effects of the present application are as follows:

The present application provides the battery cover and the power battery. The core and the insulating support are accommodated in an accommodation space. The tab of the core is welded with the top cover assembly. The tab is accommodated in the accommodation cavity. The accommodation cavity provides a space occupied by the tab, so as to avoid scattering between the core and the top cover assembly, which causes stable structure stability. The insulating support effectively isolates the tab and the core. It solves the problem of the tab being inserted into the core backwards due to reshaping. It avoids short circuit, improves the safety and reliability of the power battery, and improves the yield rate.

### BRIEF DESCRIPTION OF THE DRAWINGS

FIG. 1 is a front view of a power battery according to one or more embodiments of the present application.
FIG. 2 is a side view of FIG. 1.
FIG. 3 is a schematic structural diagram of a battery cover according to one or more embodiments of the present application.
FIG. 4 is a bottom view of FIG. 3.
FIG. 5 is a cross-sectional view taken along A-A line in FIG. 4.
FIG. 6 is an exploded view of the battery cover from one perspective.
FIG. 7 is an exploded view of the battery cover from another perspective.

In the drawings:
1. top cover assembly; 11. cover plate; 12. upper plastic part; 13. lower plastic part; 131. slot; 132. recess; 14. terminal; 141. lower terminal block; 15. insulating cover sheet; 16. insulating plate; 17. liquid injection hole;
2. insulating support; 21. first support; 22. second support; 23. notch; 231. rounded corner; 24. fastener; 25. through hole;
3. case; 4. core; 41. tab; 5. seal; P. accommodation cavity.

### DETAILED DESCRIPTION OF THE EMBODIMENTS

In the description of the present application, unless otherwise expressly specified and limited, the terms "coupled" "connected" and "fixed" shall be understood in a broad sense, for example, they may be fixed connection, removable connection, or integral. They may be mechanical connection or electrical connection. They may be directly connected or indirectly connected through intermediate medium. They may be internal connection of two elements or interaction of two elements. Those of ordinary skilled in the art may understand the specific meaning of the above terms in the present application in specific circumstances.

In the present application, unless otherwise expressly specified and defined, a first feature "above" or "below" a second feature may include the first feature directly contacts with the second feature, or it may include the first feature does not directly contact with the second feature but through another feature between them. Also, the first feature "above," "upper" and "over" the second feature includes the first feature directly above and obliquely above the second feature, or merely indicates that the first feature has a higher horizontal height than the second feature. The first feature "below," "lower" and "under" the second feature includes the first feature directly below and obliquely below the second feature, or merely indicates that a horizontal height of the first feature is less than the second feature.

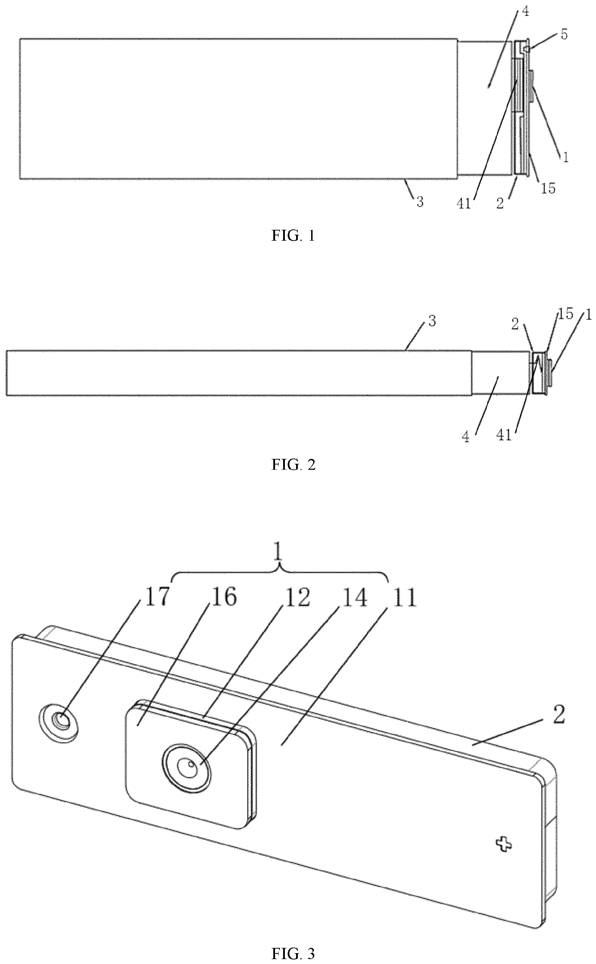

One or more embodiments of the present application provide a power battery. As shown in FIGS. 1-5, the power battery includes a case 3, a core 4 and a battery cover. In addition, one or more embodiments of the present application provide a battery cover including a top cover assembly 1 and an insulating support 2. The top cover assembly 1 can be fixedly connected with the case 3, and the case 3 and the top cover assembly 1 form an accommodation space for accommodating the core 4. The top cover assembly 1 can be welded with a tab 41 on the core 4. The insulating support 2 can be accommodated in the accommodation space. The insulating support 2 and the top cover assembly 1 form an accommodation cavity P for accommodating the tab 41. The insulating support 2 is provided with a notch 23 for the tab 41 to pass through.

When the power battery is provided with the battery cover, the core 4 and the insulating support 2 are accommodated in the accommodation space. The tab 41 of the core 4 is welded with the top cover assembly 1. The tab 41 is accommodated in the accommodation cavity P. That is, the accommodation cavity P provides an accommodation space for the tab 41, thereby preventing the tab 41 from being spread between the core 4 and the top cover assembly 1. Thus, the structure is stable. In addition, the insulating support 2 effectively isolates the tab 41 from the core 4, thereby preventing a reshaped part of the tab 41 due to reshaping of the tab 41 from being inserted into the core 4 backwards. Thus, a short circuit can be avoided, improving safety and reliability of the power battery, and improving the yield rate of the power batteries.

In one or more embodiments, the power battery may a blade battery or another battery.

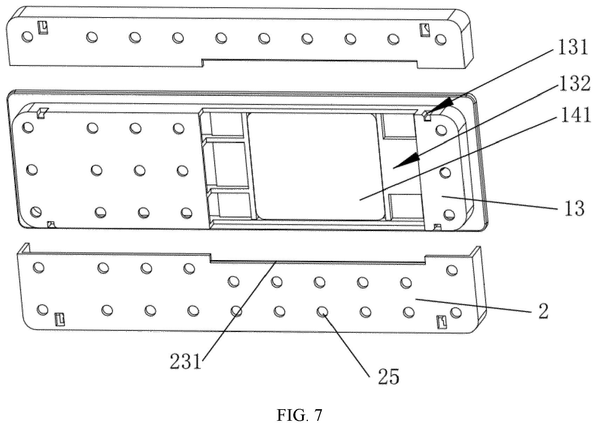

In one or more embodiments, as shown in FIGS. 3 and 7, the top cover assembly 1 includes a cover plate 11, an upper plastic part 12, a lower plastic part 13, and a terminal 14. The cover plate 11 can be fixedly connected to the case 3. The upper plastic part 12 and the lower plastic part 13 are respectively fixed on opposite sides of the cover plate 11. The lower plastic part 13 is connected with the insulating support 2. The terminal 14 extends through the lower plastic part 13, the cover plate 11 and the upper plastic part 12. The terminal 14 can be welded with the tab 41. The cover plate 11 is generally an aluminum plate. With the upper plastic part 12 and the lower plastic part 13 arranged, a short circuit can be prevented. In addition, the terminal 14 has a lower terminal block 141 disposed on a side facing the core 4. The lower terminal block 141 has a relatively large cross-sectional area, so as to increase an area of connection with the tab 41 and improve structural reliability. In one or more embodiments, the notch 23 is disposed toward the lower terminal block 141 at the end of the terminal 14, so that the tab 41 can pass through the notch 23 after being welded with the lower terminal block 141. In one or more embodiments, the lower plastic part 13 is provided with a recess 132. The lower plastic part 13 and the insulating support 2 form the accommodation cavity P. In one or more other embodiments, the insulating support 2 may be provided with the recess 132 to form the accommodation cavity P. In one or more yet other embodiments, each of the lower plastic part 13 and the insulating support 2 may be provided with the recess 132 to form the accommodation cavity P. The arrangement may be determined according to the actual situation and is not limited. For example, the lower plastic part 13 may not be retained in a region corresponding to the lower terminal block 141, so as to prevent the lower plastic part 13 from affecting the welding of the lower terminal block 141 with the tab 41. In one or more embodiments, the accommodation cavity P is a cuboid-shaped cavity, which increases the accommodation space and facilitates the arrangement of the tab 41. For example, a length of the notch 23 = the width of the tab 41 + 2-5 mm, and a depth of the notch 23 = the thickness of the tab 41 + 1-2 mm.

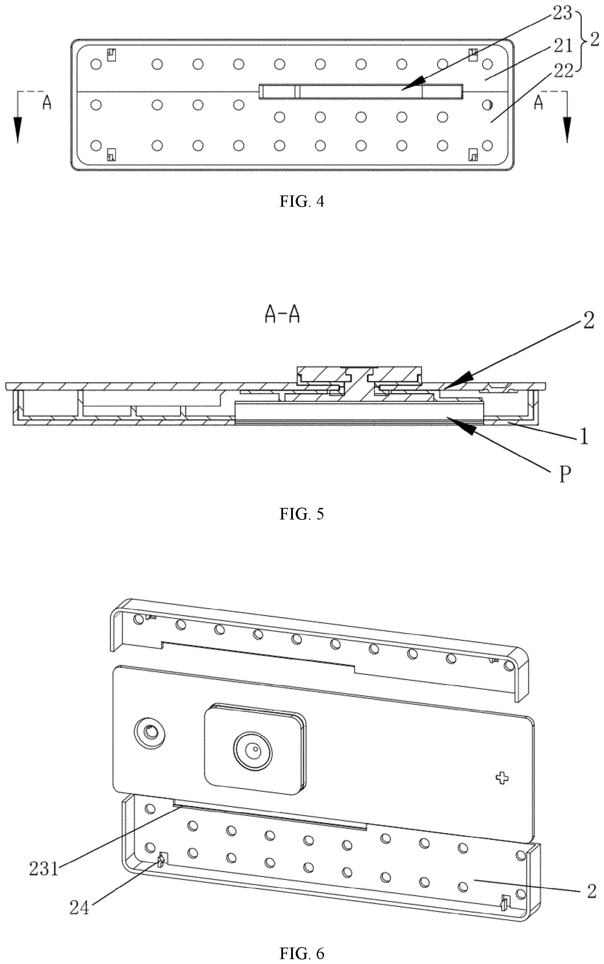

In one or more embodiments, as shown in FIG. 6, the notch 23 is provided with a fillet or a rounded corner 231 along a thickness direction of the insulating support 2, so as to avoid forming of a sharp edge at the notch 23, which can effectively prevent the tab 41 from being cut by the sharp edge in a high-intensity vibration application scenario of the core 4. By way of example, a size of the fillet or rounded corner 231 may be, but not limited to, 0.2 mm, 0.4 mm, 0.6 mm, 0.8 mm, or 1.0 mm.

In one or more embodiments, a height of the lower plastic part 13 is determined according to the thickness of the reshaped tab 41 to be accommodated. The size of the accommodation cavity P is set according to the actual situation, so as to ensure that an energy density can be increased as much as possible under the condition of accommodation of the tab 41. For example, the height of the lower plastic part 13 = the number of layers of the tab 41 * the thickness of the foil * 3 * a correction coefficient. When a positive tab 41 is to be accommodated, the correction coefficient can be adjusted within a range of 1.5-2.5. When a negative tab 41 is to be accommodated, the correction coefficient can be adjusted within a range of 1.2-2.0.

In one or more embodiments, as shown in FIG. 6 and FIG. 7, the insulating support 2 is detachably connected to the top cover assembly 1, which can prevent the insulating support 2 from falling off during the process of assembling the core 4, improve the connection stability and reliability, and facilitate disassembly. For example, the insulating support 2 is disposed to cover the lower plastic part 13, and the insulating support 2 is clamped with the lower plastic part 13. In one or more embodiments, the lower plastic part 13 is provided with a slot 131, and the insulating support 2 is provided with a fastener 24 that can be clamped to the slot 131. In other embodiments, the insulating support 2 is provided with a slot 131, and the lower plastic part 13 is provided with a fastener 24. For example, a number of groups of slots 131 and a number of groups of fasteners 24 are provided, and the number may be, but not limited to, 4, 6, and 8. The slots 131 may be symmetrically distributed on opposite sides of the lower plastic part 13, and the fasteners 24 may be symmetrically distributed on opposite sides of the insulating support 2.

By way of example, the top cover assembly 1 also includes an insulating sealing ring disposed between the terminal 14 and the cover plate 11 to ensure sealing of the accommodation space and avoid a short circuit.

In one or more embodiments, as shown in FIG. 3, the top cover assembly 1 is provided with a liquid injection hole 17. After the case 3 and the battery cover are assembled, an electrolyte can be injected into the accommodation space through the liquid injection hole 17 and serves as a channel for ion transfer. By way of example, the top cover assembly 1 also includes a seal 5 for blocking the injection hole 17 to prevent leakage of the electrolyte. By way of example, the seal 5 includes sealant plug that match the injection hole 17 and can be inserted into the injection hole 17 to enhance the sealing effect of the core 4, and a sealing aluminum sheet that can be used to weld and seal the injection hole 17.

In one or more embodiments, as shown in FIG. 3, the top cover assembly 1 further includes an insulating plate 16 disposed on a side of the upper plastic part 12 away from the cover plate 11 to improve structural reliability.

For example, the case 3 may be an aluminum case, and the cover plate 11 may be an aluminum plate. The cover plate 11 is welded with the case 3. During welding, pre-spot welding is performed. The number of welding spots for pre-spot welding may be, but not limited to, 6EA, 8EA, or 10EA. The welding spots for pre-spot welding are symmetrically distributed. In one or more embodiments, the top cover assembly 1 further includes an insulating cover sheet 15 attached to the cover plate 11 to prevent a short circuit between the terminal 14 and the cover plate 11 due to external connection.

In one or more embodiments, the core 4 is coated with a protective film. An outer surface of the case 3 is coated with a protective film for insulation. With each of positive and negative tabs 41 ultrasonically welded, the core 4 is coated with a protective film to prevent the core 4 from being scratched when entering the case. The protective film may be of a polymer material with insulation, high temperature resistance and electrolyte corrosion resistance, and can be, but not limited to, a PET (polyethylene terephthalate) sheet with adhesive on one side.

In one or more embodiments, the tab 41 is coated with protective glue for insulation, so that a short circuit between the tab 41 and the aluminum case 3 can be effectively avoided. The core 4 coated with the protective film has an adhesive tape pasted at the tab 41. A width of the adhesive tape exceeds the width of the tab 41 by 2~10 mm. A part of the adhesive tape coated on the core 4 has a length of 5-25 mm. A part of the adhesive tape coated on the tab 41 has a distance of 0-5 mm from the welding area. The protective glue of the tab 41 can ensure complete insulation at a place where the tab 41 is attached to the aluminum case after the core enters the case.

The tab 41 of the core 4 may be laser welded with the corresponding top cover. The length and width of the welding wire are designed according to an overcurrent capacity required by the core to ensure the power requirement of the core. After the tab 41 is welded with the top cover, insulation treatment may be performed on the welding mark area by glue dispensing or adhesive tape pasting. The insulating glue layer or insulating adhesive tape shall be wide enough to completely cover the tab 41 in the width direction and be long enough to completely cover the tab 41 and the laser welding mark in the length direction.

In one or more embodiments, the core 4 is provided with a positive tab 41 and a negative tab 41. The core 4 includes a positive active material, a negative active material, a positive current collector, a negative current collector, and a separator. The active materials provide a solid-phase reaction interface for the electrochemical reaction of the battery. The current collectors after gain/loss of electrons provide an electron channel for electron transfer. The separator can isolate electrons and allow ions to pass through.

In one or more embodiments, a welding mark is provided on the tab 41. For example, the tab 41 can be flattened by a flat-tooth ultrasonic welding. Compared with deep-tooth welding, the flat-tooth ultrasonic welding will result in a larger welding mark area and a flatter welding mark. Then, the flattened tab 41 is welded with the lower terminal block 141 of the top cover assembly 1 by laser welding, which can enhance the strength of welding between the tab 41 and the top cover assembly 1, improve an overcurrent capacity of the battery, and has high welding reliability. The tab 41 of each layer is welded, and the size of the welding mark matches the size of a welding wire used for laser welding of the tab 41 and the cover plate 11. The size of ultrasonic flat welding can be, but not limited to, 10 mm * 20 mm, 15 mm * 20 mm, or 10 mm * 30 mm, and the number of welding marks can be, but not limited to, 1EA, 2EA or 3EA. One welding mark may be adopted if the welding mark area allows. The number of the cores 4 may be, but not limited to, 1EA, 2EA or 3EA. Generally, the number of the cores 4 of a blade battery does not exceed 2EA.

The insulating support 2 may be mounted after the tab 41 is bent and reshaped, which is beneficial for the insulating support 2 to effectively fix the reshaped tab 41 in the accommodation cavity P formed by the insulating support 2 and the lower plastic part 13. In one or more embodiments, as shown in FIG. 2, the tab 41 are bent in a Z-shape in the accommodation cavity P, so that the tab 41 is folded, which is convenient for putting the reshaped tab 41 into the accommodation cavity P when the insulating support 2 is mounted.

In one or more embodiments, the insulating support 2 abuts against the core 4 to fix the core 4, which can ensure that the core 4 does not shake, thereby improving stability.

In one or more embodiments, as shown in FIG. 4, the insulating support 2 includes two support bodies. The two support bodies are both connected to the top cover assembly 1. The notch 23 is formed between the two support bodies. A recess may be provided on only one of the support bodies to form the notch 23 between the two support bodies. Alternatively, a recess may be provided on each of the support bodies to form the notch 23 between the two support bodies. Both of the support bodies are detachably connected with the lower plastic part 13 to improve connection reliability. The two support bodies can be called a first support 21 and a second support 22, respectively. The first support 21 and the second support 22 may have different sizes, respectively, so that a position where the notch 23 is formed can be set according to the actual conditions. For example, the position can be set to correspond to a position of the folded tab 41. For example, the first support 21 and the second support 22 may be made of the same material or different materials, respectively.

For example, the insulating support 2 is made of a material having sufficient hardness and having resistance to electrolyte corrosion and high temperature. The material may be, but not limited to, PP (polypropylene) material. A thickness of the insulating support 2 may be, but not limited to, 0.5 mm, 1.0 mm, 1.5 mm or 2.0 mm. The height of the insulating support 2 matches the height of the lower plastic part 13. For example, as shown in FIG. 4, the insulating support 2 is provided with through holes 25 communicating with the accommodation cavity P. Each through hole 25 may be, but not limited to, in a circular shape or a square shape. The through holes 25 are designed to facilitate free flow of the electrolyte in the inner space of the core.

One or more embodiments provide a process of manufacturing a core 4, including the following steps. In the first step of homogenizing positive and negative electrodes, the positive active material, the negative active material, a conductive agent and a binder are uniformly dispersed into a solvent at a certain mass ratio. In the second step of coating the positive and negative electrodes, the uniformly dispersed positive and negative electrode slurry is stably coated on positive and negative current collectors. In the third step of preparing positive and negative electrode sheets, the coated positive and negative electrode sheets are rolled to the specified thickness and then cut to a specified size. In the fourth step of winding (or laminating) and assembling, the prepared positive and negative electrode sheets are wound (or laminated) into the core 4 that is then assembled into a battery. In the fifth step of baking, the assembled battery is baked in the vacuum oven to the specified moisture value. In the sixth step of injection, the electrolyte is injected into the battery, and then the battery is let stand until the electrolyte completely infiltrates the electrode sheets. In the seventh step of formation, the battery is activated, and the gas generated by side reaction in the battery is discharged by pumping negative pressure. In the eighth step of dividing the capacity, the formed battery is sealed and welded, and the capacity is divided according to the preset process.

One or more embodiments provide a process of assembling a power battery, including the following steps S1-S13.

At step S1, a positive tab 41 and a negative tab 41 of a core 4 are respectively welded through flat-tooth ultrasonic welding process.

At step S2, the core 4 is coated with a protective film.

At step S3, the positive tab 41 and the negative tab 41 are pasted with protective glue.

At step S4, the tab 41 is welded and glued to a top cover (it may be the positive tab 41 or the negative tab 41 first).

At step S5, the welded tab 41 is bent and reshaped in a Z-shape.

At step S6, the insulating support 2 is mounted. The first support 21 and the second support 22 of the insulating support 2 are successively clamped to the lower plastic part 13, and the reshaped part of the tab 41 is completely accommodated in the cavity formed by the two support bodies and the lower plastic part 13 and is completely isolated from the core 4.

At step S7, the core 4 with the insulating support 2 is put into case 3.

At step S8, the top cover assembly 1 is fitted to the case 3 to close the case 3, and the cover plate 11 is fixed to the case 3 by pre-spot welding with laser.

At step S9, the tab 41 on an other side of the core 4 is laser welded to the top cover assembly 1 and then the welding mark glue is pasted to completely cover the welding mark and the tab 41.

At step S10, the welded tab 41 is bent and reshaped in a Z-shape, so that the tab 41 is folded.

At step S11, the insulating support 2 is mounted. The first support 21 and the second support 22 of the insulating support 2 are successively clamped to the lower plastic part 13, so that the fastener 24 of the insulating support 2 is completely clamped into the slot 131 of the lower plastic part 13, and the reshaped part of the tab 41 is completely accommodated in the accommodation cavity P formed by the insulating support 2 and the lower plastic part 13 and is completely isolated from the core 4.

At step S12, the top cover assembly 1 is fitted to the case 3 to close the case 3, and the cover plate 11 is fixed to the case 3 by pre-spot welding with laser. The number of welding spots may be consistent with the number of spots of the above-mentioned pre-spot welding for the cover plate 11.

At step S 13, the cover plate 11 of the positive and negative electrodes of the core are fully welded to the case 3 by laser welding so as to ensure that the welding area is completely sealed.

## Claims

1. A battery cover, **characterized by** comprising:
a top cover assembly (1) capable of being fixedly connected with a case (3) to form an accommodation space for accommodating a core (4), and capable of being welded with a tab (41) on the core (4); and
an insulating support (2) capable of being accommodated in the accommodation space, wherein the insulating support (2) and the top cover assembly (1) form an accommodation cavity (P) for accommodating the tab (41), and the insulating support (2) is provided with a notch (23) for the tab (41) to pass through.

2. The battery cover according to claim 1, **characterized in that** the insulating support (2) is detachably connected to the top cover assembly (1).

3. The battery cover according to claim 1, **characterized in that** the insulating support (2) comprises two support bodies each connected with the top cover assembly (1), and the notch (23) is formed between the two support bodies.

4. The battery cover according to claim 1, **characterized in that** the notch (23) is provided with a fillet or rounded corner (231) along a thickness direction of the insulating support (2).

5. The battery cover according to claim 1, **characterized in that** a welding mark is provided on the tab (41), and the welding mark is coated with insulating glue.

6. The battery cover according to claim 1, **characterized in that** the accommodation cavity (P) is a cuboid-shaped cavity.

7. The battery cover according to claim 1, **characterized in that** the tab (41) is bent in a Z-shape in the accommodation cavity (P).

8. The battery cover according to claim 1, **characterized in that** the insulating support (2) is arranged to abut against the core (4).

9. The battery cover according to claim 1, **characterized in that** the insulating support (2) is provided with a through hole (25) communicating with the accommodation cavity (P).

10. The battery cover according to claim 1, **characterized in that**
the core (4) is coated with a protective film; and/or
an outer surface of the case (3) is coated with a protective film; and/or
the tab (41) is pasted with protective glue.

11. The battery cover according to any one of claims 1-10, **characterized in that** the top cover assembly (1) comprises:
a cover plate (11) capable of being fixedly connected with the case (3);
an upper plastic part (12) and a lower plastic part (13) fixed respectively on opposite sides of the cover plate (11), the lower plastic part (13) being connected with the insulating support (2); and
a terminal (14) extending through the upper plastic part (12), the cover plate (11) and the lower plastic part (13), and being capable of being welded with the tab (41).

12. The battery cover according to claim 11, **characterized in that** at least one of the lower plastic part (13) and the insulating support (2) is provided with a recess (132), and the accommodation cavity (P) is formed by the lower plastic part (13) and the insulating support (2).

13. The battery cover according to claim 11, **characterized in that** the notch (23) is disposed toward a lower terminal block (141) at an end of the terminal (14).

14. A power battery, **characterized by** comprising a case (3), a core (4) and the battery cover according to any one of claims 1-13, wherein the core (4) and the insulating support (2) are accommodated in the accommodation space, the tab (41) of the core (4) is welded with the top cover assembly (1), and the tab (41) is accommodated in the accommodation cavity (P).
